# EUROPEAN PATENT APPLICATION

(11) **EP 2 428 545 A1**
(43) Date of publication of application: **14.03.2012**
(21) Application number: 10771963.5
(22) Date of filing: 05.05.2010
(51) Int. Cl.: C09K 11/61, C09K 11/59, C09K 11/55, H05B 33/14

(54) **BLUE-GREEN SILICATE LUMINESCENT MATERIALS**

(30) Priority: 07.05.2009 CN 200910011478
(71) Applicant: Dalian Luminglight Co., Ltd., Liaoning 116025 (CN)
(72) Inventor: XIAO, Zhiguo, Liaoning 116025 (CN); WANG, Xifeng, Liaoning 116025 (CN); XIA, Wei, Liaoning 116025 (CN); SANG, Shiyun, Liaoning 116025 (CN); LIU, Jianxiong, Liaoning 116025 (CN); ZHANG, Hongwei, Liaoning 116025 (CN)
(74) Representative: Böhm, Brigitte
(86) International application number: PCT/CN2010/000632
(87) International publication number: WO 2010/127560

(57) **Abstract**

The present invention provide blue-green silicate luminescent materials, which are rare earth activated alkaline-earth metals silicates having a formula of Ba_{1-b}M_{b}Si₂O_{(5-a/2)}Dₐ:Euₓ, Ln_{y}, wherein M is one or two elements selected from the group consisting of Mg, Ca and Sr; D is one or two ions selected from the group consisting of Cl⁻ and F⁻; Ln is an ion selected from Ce, Er, Pr or Mn; a, b, x, and y are molar coefficients and within following ranges: 0≤a<2, 0≤b<0.5, 0<x<1, 0≤y<0.5. the blue-green silicate luminescent material can be excited by UV, violet and blue lights of 200 nm-450 nm and emit blue-green light with a peak wavelength of around 490-510 nm. The luminescent materials can be used not only in color-rendering index adjustment of tricolor lamps and white-light LED, but also in decoration and lighting with special colors.

## Description

### Technical Field

The present invention relates to a blue-green silicate luminescent material, and belongs to the technical field of rare earth luminescent materials.

### Background Art

With the improvement of living standard, the requirements to the rendition of environmental colors are increasing, and therefore the requirements on color-rendering index are increasing gradually. Adding blue-green components in tricolor lamps or white-light LED lamps would cause the light color emitted be closer to daylight color.

Chinese patent CN200710036123.0 discloses a blue-green aluminate luminescent material, which is used for improving the color-rendering index of tricolor energy-saving lamps. However, such luminescent materials have narrow excitation ranges and cannot be used to adjust the color-rendering index of white-light LED. Moreover, the patent does not provide the excitation and emission spectra of such materials. Luminescent materials with silicates as the matrix have a wide excitation band and can be excited to emit lights in various colors under the excitation of UV, near UV, blue lights; thus such material have been studied extensively. In the year of 1968, Blasse made a systematically research on the luminescence of Eu²⁺ in alkaline-earth metal silicates (Blasse G, Wanmaker W L, ter Vrugt J W, et al. Fluorescence of Eu2+-activated silicates [J]. Philips Res Repts, 1968, 23:189-200). However, this research was only limited in the range of UV excitation.

### Summary of the Invention

The object of the invention is to provide a blue-green silicate luminescent material, which can be excitated by UV, violet, blue lights of 200-450 nm (thus being wide-band excitation), and emit blue-green light with a peak wavelength of around 490-510 nm. The materials can be used for adjusting the lighting color of rare earth tricolor energy-saving lamps and white-light LED and also for preparing decorative lamps with special colors.

The blue-green silicate luminescent material of the invention has a chemical composition of formula (I):

Ba_{1-b}M_{b}Si₂O_{(5-a/2)}Dₐ:Euₓ, Ln_{y} (1)

wherein the molar coefficients a, b, x, y are within following ranges: 0≤a≤2, 0≤b<0.5, 0<x<1, 0≤y<0.5. M is one or two elements selected from the group consisting of Mg, Ca and Sr; D is one or two ions selected from the group consisting of Cl⁻ and F⁻; Ln is an ion selected from Ce, Er, Pr or Mn.

In a preferred embodiment of the blue-green silicate luminescent materials according to the invention, the molar coefficients a, b, x, y in the formula (1) are within following ranges: 0≤a<1, 0≤b<0.5, 0<x<0.5, 0≤y<0.2.

In a preferred embodiment of the blue-green silicate luminescent materials according to the invention, the molar coefficients a, b, x, y in the formula (1) are within following ranges: 0≤a<1, 0≤b<0.5, 0<x<0.5, 0<y<0.2.

In a preferred embodiment of the blue-green silicate luminescent materials according to the invention, the molar coefficients a, b, x, y in the formula (1) are within following ranges: 0<a<1, 0≤b<0.5, 0<x<0.5, 0≤y<0.2.

In a preferred embodiment of the blue-green silicate luminescent materials according to the invention, the molar coefficients a, b, x, y in the formula (1) are within following ranges: 0<a<1, 0≤b<0.5, 0<x<0.5, 0<y<0.2.

When preparing the blue-green silicate luminescent materials according to the invention, the raw materials utilized are compounds of each element in the formula (1). In the raw materials generally selected, the compounds of M are carbonates, nitrates, oxides or hydroxides of the elements represented thereby; the compounds of Eu and Ln are oxides, hydroxides, or halides of the elements represented thereby, respectively; the compounds of D can be barium chloride, strontium chloride, ammonium chloride, calcium fluoride, barium fluoride, ammonium fluoride or magnesium fluoride.

The fabrication process can be a liquid phase process or high temperature solid phase reaction process. The liquid phase process comprises: preparing a precursor by sol-gel method or co-precipitation metaccording to the invention, the molar coefficients a, b, x, y in the formula (1) are within following ranges: 0≤a<1, 0≤b<0.5, 0<x<0.5, 0≤y<0.2.

In a preferred embodiment of the blue-green silicate luminescent materials according to the invention, the molar coefficients a, b, x, y in the formula (1) are within following ranges: 0≤a<1, 0≤b<0.5, 0<x<0.5, 0<y<0.2.

In a preferred embodiment of the blue-green silicate luminescent materials according to the invention, the molar coefficients a, b, x, y in the formula (1) are within following ranges: 0<a<1, 0≤b<0.5, 0<x<0.5, 0≤y<0.2.

In a preferred embodiment of the blue-green silicate luminescent materials according to the invention, the molar coefficients a, b, x, y in the formula (1) are within following ranges: 0<a<1, 0≤b<0.5, 0<x<0.5, 0<y<0.2.

When preparing the blue-green silicate luminescent materials according to the invention, the raw materials utilized are compounds of each element in the formula (1). In the raw materials generally selected, the compounds of M are carbonates, nitrates, oxides or hydroxides of the elements represented thereby; the compounds of Eu and Ln are oxides, hydroxides, or halides of hod, drying the precursor, grinding, sieving, firing under the protection of oxidative or inert gas, and then firing at a temperature of 1000-1400°C in a weakly reducing atmosphere for 3-20 hours, then cooling, crushing and grading.

The high temperature solid phase reaction process comprises: dry mixing or wet mixing appropriate amounts of various raw materials by means of planetary ball mill/fast ball mill, drying the mixed powders, firing at a temperature of 1000-1400°C in a weakly reducing atmosphere for 3-20 hours, then cooling, crushing and grading.

The high temperature solid phase reaction process may also utilize a two-step process: dry mixing or wet mixing appropriate amounts of various raw materials by means of planetary ball mill/fast ball mill, and firing the mixed powders twice, wherein the first firing is carried out at a temperature of 1000-1300°C in a weakly reducing atmosphere for 2-10 hours; the second firing is carried out at a temperature of 1000-1400°C in a weakly reducing atmosphere for 2-20 hours, and then cooling, crushing and grading.

In the present invention, the blue-green silicate luminescent materials are prepared by high temperature solid phase process. In order to mix the raw materials uniformly, the raw materials can be mixed by means of wet ball mill. The ball mill medium may be organic solvents such as alcohol, acetone, isopropanol, etc., and can also be deionized water; the raw materials can also be mixed by means of dry ball mill. The ball mill can be a fast ball mill or planetary high speed ball mill.

The blue-green silicate luminescent materials of present invention were prepared by high temperature solid phase process. In order to improve the quality of the materials, a small amount, 0%-10% by weight of other compounds such as boric acid, NH₄Cl, NH₄F, (NH₄)₂HPO₄, BaF₂, CaF₂, SrF₂, ZnF₂, MgF₂, BaCl₂·2H₂O, MgCl₂·6H2O, SrHPO₄, CaHPO₄, Li₂CO₃, NaF, K₂CO₃ can be added into the raw materials to participle the solid phase reaction as fluxing agents.

In present invention, the excitation and emission spectra of the luminescent materials are determined by Hitach F-4500 fluorescence spectrometer.

### Description of the Drawings

Fig. 1 shows the excitation and emission spectra of the luminescent material BaSi₂O_{4.99}Cl_{0.02}:Eu_{0.05}.
Fig. 2 shows the spectrum of luminescent material BaSi₂O_{4.99}Cl_{0.02}:Eu_{0.05} for violet light chip packaging.

### Preferred Embodiments

### Example 1: BaSi₂O_{4.99}Cl_{0.02}:Eu_{0.05}

| | |
|---|---|
| BaCO₃ | 49.2 g |
| SiO₂ | 30 g |
| BaCl₂·2H₂O | 0.61 g |
| Eu₂O₃ | 2.2 g |
| Boric acid | 0.15 g |

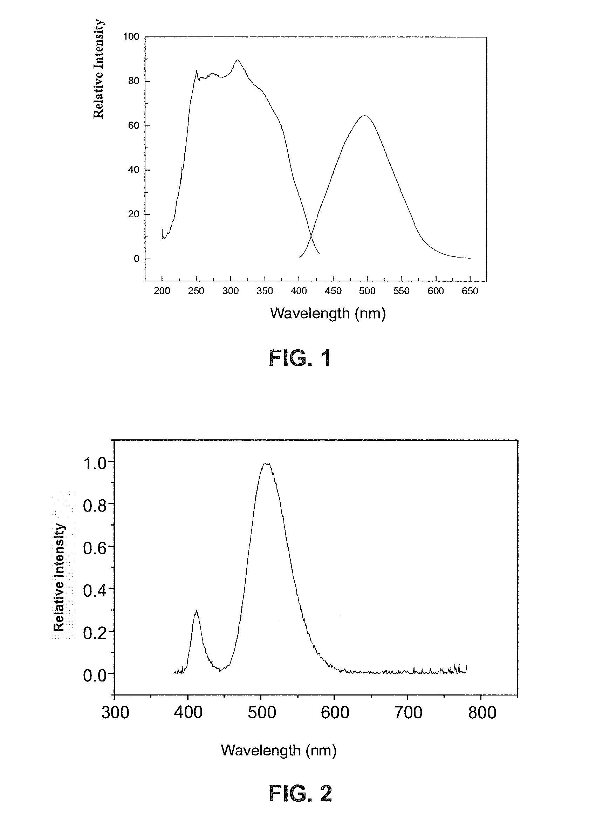

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1260°C for 4 hours; after cooling, crushing and grading, a product having median particle size of 12 µm was obtained, and the emission peak of the product was at 502 nm (λₑₓ=365 nm). The excitation and emission spectra of the samples were shown in figure 1.

### Example 2: BaSi₂O₅:Eu_{0.05}Ce_{0.01}

| | |
|---|---|
| BaCO₃ | 49.2 g |
| SiO₂ | 30 g |
| CeO₂ | 0.43 g |
| Eu₂O₃ | 2.2 g |
| (NH₄)₂HPO₄ | 0.24 g |

Above raw materials were mixed in a fast ball mill uniformly; and the mixture was put into an alumina crucible of at least 95% ceramic; the mixture was subjected to a two-step firing, the first step firing was carried out in a pushing plate furnace with a weakly reducing atmosphere (5% H₂+95% N₂) and held at 1260°C for 4 hours, after cooling and crushing, the intermediate was fired again in a pushing plate furnace with a weakly reducing atmosphere (5% H₂+95% N₂) and held at 1100°C for 3 hours; after cooling, crushing and grading, a product having median particle size of 12 µm was obtained, and the emission peak of the product was at 502 nm (λₑₓ=365 nm).

### Example 3: BaSi₂O₅:Eu_{0.05}Mn_{0.01}

| | |
|---|---|
| BaCO₃ | 49.2 g |
| SiO₂ | 30 g |
| MnCO₃ | 0.29g |
| Eu₂O₃ | 2.2 g |
| Boric acid | 0.15 g |

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1000°C for 5 hours, after cooling and crushing, the intermediate was again held in a pushing plate furnace with a weakly reducing atmosphere (5% H₂+95% N₂) at 1260°C for 4 hours; after cooling, crushing and grading, a product having median particle size of 12 µm was obtained, and the emission peak of the product was at 504 nm (λₑₓ=365 nm).

### Example 4: BaSi₂O_{4.99}F_{0.02}:Eu_{0.05}

| | |
|---|---|
| BaCO₃ | 49.2 g |
| SiO₂ | 30 g |
| BaF₂ | 0.44 g |
| Eu₂O₃ | 2.2 g |
| NH₄Cl | 0.48 g |

Above raw materials were mixed in a fast ball mill uniformly; and the mixture was put into an alumina crucible of at least 95% ceramic; then the crucible was held in a pushing plate furnace with a weakly reducing atmosphere (5% H₂+95% N₂) at 1260°C for 4 hours; after cooling, crushing and grading, a product having median particle size of 12 µm was obtained, and the emission peak of the product was at 498 nm(λₑₓ=365 nm).

### Example 5: Ba_{0.8}Sr_{0.2}Si₂O₅:Eu_{0.12}

| | |
|---|---|
| SrCO₃ | 7.38 g |
| BaCO₃ | 39.36 g |
| SiO₂ | 30 g |
| Eu₂O₃ | 5.28 g |
| Boric acid | 0.15 g |

Above raw materials were mixed in a planetary ball mill uniformly; and the mixture was put into an alumina crucible of at least 95% ceramic; then the crucible was held in a box type furnace with a weakly reducing atmosphere (5% H₂+95% N₂), the temperature was raised at a speed of 4 °C per minute and held at 1260°C for 4 hours; after cooling, crushing and grading, a product having median particle size of 12 µm was obtained, and the emission peak of the product was at 505 nm (λₑₓ=365 nm).

### Example 6: BaSi₂O5:Eu_{0.05}Pr_{0.01}

| | |
|---|---|
| BaCO₃ | 49.2 g |
| SiO₂ | 30 g |
| Eu₂O₃ | 2.2 g |
| Pr₆O₁₁ | 0.42 g |
| Li₂CO₃ | 0.13 g |

Above raw materials were mixed in a planetary ball mill uniformly; and the mixture was put into an alumina crucible of at least 95% ceramic; then the crucible was held in a box type furnace with a weakly reducing atmosphere (5% H₂+95% N₂), the temperature was raised at a speed of 3 °C per minute and held at 1260°C for 4 hours; after cooling, crushing and grading, a product having median particle size of 12 µm was obtained, and the emission peak of the product was at 507 nm (λₑₓ=365 nm).

### Example 7: BaSi₂O₅:Eu_{0.05}Er_{0.01}

| | |
|---|---|
| BaCO₃ | 49.2 g |
| SiO₂ | 30 g |
| Eu₂O₃ | 2.2 g |
| Er₂O₃ | 0.48 g |
| MgCl₂·6H₂O | 0.46 g |

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1100°C for 4 hours, after cooling and crushing, the intermediate was again held in a pushing plate furnace with a weakly reducing atmosphere (5% H₂+95% N₂) at 1260°C for 6 hours; after cooling, crushing and grading, a product having median particle size of 12 µm was obtained, and the emission peak of the product was at 504 nm (λₑₓ=365 nm).

### Example 8: BaSi₂O_{4.5}F:Eu_{0.05}

| | |
|---|---|
| BaCO₃ | 24.6 g |
| SiO₂ | 30 g |
| Eu₂O₃ | 2.2 g |
| BaF₂ | 22 g |

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1000°C for 4 hours; after cooling, crushing and grading, a product having median particle size of 12 µm was obtained, and the emission peak of the product was at 496 nm (λₑₓ=365 nm).

### Example 9: BaSi₂O_{4.2}FCl_{0.6}:Eu_{0.05}Ce_{0.3}

| | |
|---|---|
| BaCO₃ | 9.84 g |
| SiO₂ | 30 g |
| Eu₂O₃ | 2.2 g |
| BaF₂ | 22 g |
| BaCl₂·2H₂O | 18.32 g |
| CeO₂ | 12.9 g |

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1000°C for 4 hours; after cooling, crushing and grading, a product having median particle size of 12 µm was obtained, and the emission peak of the product was at 490 nm (λₑₓ=365 nm).

### Example 10: BaSi₂O₅:Eu₀.₂₅Ce₀.₀₁

| | |
|---|---|
| BaCO₃ | 49.2 g |
| SiO₂ | 30 g |
| Eu₂O₃ | 1.1 g |
| CeO₂ | 0.43 g |
| Boric acid | 0.15 g |

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1270°C for 4 hours; after cooling, crushing and grading, a product having median particle size of 12 µm was obtained, and the emission peak of the product was at 501 nm (λₑₓ=365 nm).

### Example 11: BaSi₂O₅:Eu_{0.6}Mn_{0.4}

| | |
|---|---|
| BaCO₃ | 49.2 g |
| SiO₂ | 30 g |
| Eu₂O₃ | 26.4 g |
| MnCO₃ | 11.49 g |
| Boric acid | 0.15 g |

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1260°C for 4 hours; after cooling, crushing and grading, a product having median particle size of 12 µm was obtained, and the emission peak of the product was at 510 nm (λₑₓ=365 nm).

### Example 12: Ba_{0.6}Ca_{0.3}Mg_{0.1}Si₂O₅:Eu_{0.8}

| | |
|---|---|
| BaCO₃ | 29.52 g |
| CaCO₃ | 7.5 g |
| MgO | 1 g |
| SiO₂ | 30 g |
| Eu₂O₃ | 35.2 g |
| Boric acid | 0.15 g |

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1260°C for 5 hours; after cooling, crushing and grading, a product having median particle size of 12 µm was obtained, and the emission peak of the product was at 508 nm (λₑₓ=365 nm).

### Example 13: Ba_{0.9}Mg_{0.1}Si₂O₅:Eu_{0.03}

| | |
|---|---|
| BaCO₃ | 44.28 g |
| MgO | 1 g |
| SiO₂ | 30 g |
| Eu₂O₃ | 1.32 g |
| Boric acid | 0.15 g |

Above raw materials were mixed in a planetary ball mill uniformly; and the mixture was put into an alumina crucible of at least 95% ceramic; then the crucible was held in a pushing plate furnace with a weakly reducing atmosphere (5% H₂+95% N₂) at 1250°C for 5 hours; after cooling, crushing and grading, a product having median particle size of 12 µm was obtained, and the emission peak of the product was at 493 nm (λₑₓ=365 nm).

### Example 14: BaSi₂O₅:Eu_{0.05}Ce_{0.2}

Raw materials BaCO₃, SiO₂, BaF₂, Eu₂O₃, CeO₂ and MnCO₃ were weighted in accordance with stoichiometric proportion, respectively; and 0.5% by weight of boric acid was added into the raw materials. The raw materials were mixed in a planetary ball mill uniformly, and the mixture was put into an alumina crucible of at least 95% ceramic; then the crucible was held in a pushing plate furnace with a weakly reducing atmosphere (5% H₂+95% N₂) at 1260°C for 4 hours; after cooling, crushing and grading, a product having median particle size of 12 µm was obtained, and the emission peak of the product was at 502 nm (λₑₓ=365 nm).

### Example 15: BaSi₂O₅:Eu_{0.05}

130.67 g of Ba(NO₃)₂ and 137.98 g of Eu(NO₃)₂ were weighted respectively, and dissolved in an appropriate amount of deionized water to prepare a solution (a); corresponding amount of silica gel was dissolved in deionized water to prepare a solution (b); the solution (a) was slowly poured into the solution (b), and the pH of the resulting solution was adjusted to about 9 with ammonia; the resulting solution was stirred continuously at 60°C for 2 hours, then dried and fired oxidatively at 700°C for 4 hours to obtain a precursor; the precursor was mixed with 0.5% boric acid uniformly and fired at 1180°C in a weakly reducing atmosphere (5% H₂+95% N₂) for 3 hours; after cooling, crushing and grading, a product having median particle size of 12 µm was obtained, and the emission peak of the product was at 502 nm (λₑₓ=365 nm).

### Example 16: use of BaSi₂O_{4.99}Cl_{0.02}:Eu_{0.05} luminescent material for packaging a violet light chip

The procedures are as follows: the treated BaSi₂O_{4.99}Cl_{0.02}:Eu_{0.05} luminescent material and glue AB (wherein glue A is epoxy resin and glue B is a curing agent) were mixed at a mass concentration ratio of 23%, ground for 10 minute to mix uniformly. The ground mixture was subjected to dispensing, die casting, glue-pouring, curing and demolding to package a Φ5-type LED with a forward voltage of 3.0 V and a forward current of 20 mA. The spectrum of the packaged sample was determined by PMS-50 UV-visible-near infrared spectrum analyzer. The results were shown in Fig. 2.

## Claims

1. A blue-green silicate luminescent material, **characterized in that** its main components are rare earth activated alkaline-earth metals silicates having a formula:
Ba_{1-b}M_{b}Si₂O_{(5-a/2)}Dₐ:Euₓ, Ln_{y} (1)
wherein M is one or two elements selected from the group consisting of Mg, Ca and Sr; D is one or two ions selected from the group consisting of Cl⁻ and F⁻; Ln is an ion selected from Ce, Er, Pr or Mn; a, b, x, and y are molar coefficients and within following ranges: 0≤a<2, 0≤b<0.5, 0<x<1, 0≤y<0.5; the blue-green silicate luminescent material can be excited by UV, violet and blue lights of 200 nm to 450 nm and emit blue-green light with a peak wavelength of 490-510 nm.

2. The blue-green silicate luminescent materials according to claim 1, wherein the molar coefficients a, b, x, and y are within following ranges: 0≤a<1, 0≤b<0.5, 0<x<0.5, 0≤y<0.2.

3. The blue-green silicate luminescent materials according to claim 1, wherein the molar coefficients a, b, x, and y are within following ranges: 0≤a<1, 0≤b<0.5, 0<x<0.5, 0<y<0.2.

4. The blue-green silicate luminescent materials according to claim 1 or 2, wherein the molar coefficients a, b, x, and y are within following ranges: 0<a<1, 0≤b<0.5, 0<x<0.5, 0≤y<0.2.

5. The blue-green silicate luminescent materials according to claim 1, 2, or 3 wherein the molar coefficients a, b, x, and y are within following ranges: 0<a<1, 0≤b<0.5, 0<x<0.5, 0<y<0.2.
